(19)

Europäisches
Patentamt
European
Patent Office
Office européen
des brevets

(11) **EP 3 905 124 A2**

(12) **EUROPEAN PATENT APPLICATION**

(43) Date of publication:
**03.11.2021 Bulletin 2021/44**

(51) Int Cl.:
***G06K 9/00*** *(2006.01)*

(21) Application number: **21179067.0**

(22) Date of filing: **11.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2020 CN 202011507625**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventors:
• **YE, Xiaoqing**
  **Beijing (CN)**
• **TAN, Xiao**
  **Beijing (CN)**
• **SUN, Hao**
  **Beijing (CN)**

(74) Representative: **Studio Torta S.p.A.**
**Via Viotti, 9**
**10121 Torino (IT)**

(54) **THREE-DIMENSIONAL OBJECT DETECTING METHOD, APPARATUS, DEVICE, AND STORAGE MEDIUM**

(57)    The present application discloses a three-dimensional object detecting method, apparatus, device, and storage medium, which relate to the field of artificial intelligence such as computer vision and deep learning technologies, and which can be applied to a scenario for intelligent transportation. A specific embodiment is: detecting an orientation angle and other parameters of a target object; predicting predicted coordinates of vertices of a bottom surface of the target object under two blocking types respectively; accurately determining a corresponding blocking type of the target object by selecting, based on the orientation angle of the target object, predicted coordinates of vertices of the bottom surface matching the orientation angle; using the predicted coordinates of the vertices of the bottom surface of the target object under the corresponding blocking type as coordinates of the vertices of the bottom surface of the target object; and determining a three-dimensional bounding box of the target object according to the predicted coordinates of the vertices of the bottom surface matching the orientation angle and the three-dimensional parameters of the target object. Therefore, accuracy and robustness of the three-dimensional object detection can be effectively improved.

```
┌─────────────────────────────────────┐
│ Detecting a two-dimensional image    │
│ containing a target object, and      │
│ determining three-dimensional        │ ─── S201
│ parameters of the target object,     │
│ where the three-dimensional          │
│ parameters include at least an       │
│ orientation angle and predicted      │
│ coordinates of vertices of a bottom  │
│ surface of the target object under   │
│ two blocking types and the two       │
│ blocking types include that one of   │
│ the vertices of the bottom surface   │
│ is blocked and two of the vertices   │
│ of the bottom surface are blocked    │
└─────────────────────────────────────┘
                  │
                  ▼
┌─────────────────────────────────────┐
│ Determining, according to the        │
│ predicted coordinates of the         │
│ vertices of the bottom surface of    │ ─── S202
│ the target object under the two      │
│ blocking types, predicted            │
│ coordinates of vertices of the       │
│ bottom surface matching the          │
│ orientation angle                    │
└─────────────────────────────────────┘
                  │
                  ▼
┌─────────────────────────────────────┐
│ Determining, according to the        │
│ predicted coordinates of the         │
│ vertices of the bottom surface       │ ─── S203
│ matching the orientation angle and   │
│ the three-dimensional parameters of  │
│ the target object, a three-          │
│ dimensional bounding box of the      │
│ target object                        │
└─────────────────────────────────────┘
```

FIG. 2

EP 3 905 124 A2

## Description

### TECHNICAL FIELD

The present application relates to the field of artificial intelligence such as computer vision and deep learning technologies, can be applied to a scenario for intelligent transportation, and particularly relates to a three-dimensional object detecting method, apparatus, device, and storage medium.

### BACKGROUND

In scenarios such as intelligent information control, vehicle-road collaboration, and auxiliary driving, it is necessary to perform a three-dimensional object detection based on a two-dimensional image captured by a monitoring device so as to identify information on a three-dimensional bounding box of an object, such as a vehicle, a pedestrian, a rider and the like.

Currently, for two-dimensional image-based three-dimensional object detecting methods in a monitoring scenario, a method based on vehicle binocular data has high cost and high computational complexity and thus cannot meet requirements of real-time detection; a method based on radar data has high cost and low detection accuracy.

### SUMMARY

The present application provides a three-dimensional object detecting method, apparatus, device and storage medium.

According to an aspect of the present application, there is provided a three-dimensional object detecting method, including:

detecting a two-dimensional image containing a target object, and determining three-dimensional parameters of the target object, where the three-dimensional parameters include at least an orientation angle and predicted coordinates of vertices of a bottom surface of the target object under two blocking types, where the two blocking types include that one of the vertices of the bottom surface is blocked and two of the vertices of the bottom surface are blocked;
determining, according to the predicted coordinates of the vertices of the bottom surface of the target object under the two blocking types, predicted coordinates of vertices of the bottom surface matching the orientation angle; and
determining, according to the predicted coordinates of the vertices of the bottom surface matching the orientation angle and the three-dimensional parameters of the target object, a three-dimensional bounding box of the target object.

According to another aspect of the present application, there is provided a three-dimensional object detecting apparatus, including:

a basic detecting module, configured to detect a two-dimensional image containing a target object, and determine a three-dimensional parameter of the target object, where the three-dimensional parameters include at least an orientation angle and predicted coordinates of vertices of a bottom surface of the target object under two blocking types, where the two blocking types include that one of the vertices of the bottom surface is blocked and two of the vertices of the bottom surface are blocked;
an orientation angle matching module, configured to determine, according to the predicted coordinates of the vertices of the bottom surface of the target object under the two blocking types, predicted coordinates of vertices of the bottom surface matching the orientation angle; and
a three-dimensional bounding box determining module, configured to determine, according to the predicted coordinates of the vertices of the bottom surface matching the orientation angle and the three-dimensional parameters of the target object, a three-dimensional bounding box of the target object.

According to another aspect of the present application, there is provided an electronic device, including:

at least one processor; and
a memory communicatively connected to the at least one processor;
where the memory stores instructions executable by the at least one processor, and the instructions are executed by the at least one processor to enable the at least one processor to execute the method described above.

According to another aspect of the present application, there is provided a non-transitory computer-readable storage medium storing computer instructions for enabling a computer to execute the method described above.

According to another aspect of the present application, there is provided a computer program product including a computer program which, when executed by a processor, implements the method described above.

The technology according to the present application improves robustness and accuracy of three-dimensional object detection.

It should be understood that the content described in this section is not intended to identify a key feature or an important feature in an embodiment of present application, nor is it intended to limit the scope of the present application. Other features of the present application will become readily comprehensible by the following description.

## BRIEF DESCRIPTION OF DRAWINGS

The accompanying drawings are used to better understand the present solution, but do not constitute a limitation to the present application. Among them:

FIG. 1 is a framework diagram illustrating a three-dimensional object detecting system according to an embodiment of the present application;

FIG. 2 is a flowchart illustrating a three-dimensional object detecting method according to a first embodiment of the present application;

FIG. 3 is a schematic diagram illustrating that one vertex of vertices of the bottom surface is blocked according to the first embodiment of the present application;

FIG. 4 is a schematic diagram illustrating that two of the vertices of the bottom surface are blocked according to the first embodiment of the present application;

FIG. 5 is a flowchart illustrating a three-dimensional object detecting method according to a second embodiment of the present application;

FIG. 6 is a schematic diagram illustrating calculation of an orientation angle predicted value according to the second embodiment of the present application;

FIG. 7 is a schematic diagram illustrating a three-dimensional object detecting apparatus according to a third embodiment of the present application; and

FIG. 8 is a block diagram illustrating an electronic device for implementing a three-dimensional object detecting method according to an embodiment of the present application.

## □DESCRIPTION OF EMBODIMENTS

Exemplary embodiments of the present application will be described hereunder with reference to the accompanying drawings, which include therein various details of the embodiments of the present application to facilitate understanding and should be considered as to be merely exemplary. Therefore, those of ordinary skill in the art should realize that various changes and modifications can be made to the embodiments described herein without departing from the scope and spirit of the present application. Likewise, for clarity and conciseness, descriptions of well-known functions and structures are omitted in the following description.

The present application provides a three-dimensional object detecting method, apparatus, device and storage medium, which relate to the field of artificial intelligence such as computer vision and deep learning technologies, and which can be applied to a scenario for intelligent transportation to achieve the technical effect of improving stability and precision of three-dimensional object detection.

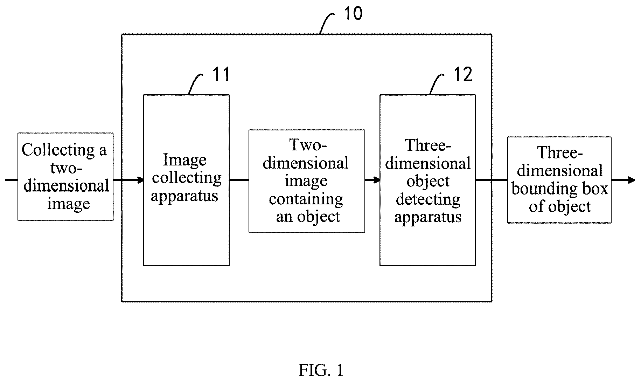

The three-dimensional object detecting method according to an embodiment of the present application can be applied to a framework of a three-dimensional object detecting system as shown in FIG. 1. The three-dimensional object detecting system may be specifically applied to scenarios such as intelligent information control, vehicle-road collaboration, auxiliary driving, monitoring system, etc., and can provide a reliable three-dimensional detection result for such as smart transportation and urban intelligent system. As shown in FIG. 1, the three-dimensional object detecting system 10 includes an image collecting apparatus 11 and a three-dimensional object detecting apparatus 12. The image collecting apparatus 11 is configured to collect an image containing an object, and may be a monitoring camera provided on a roadside or other place to capture an image of an object from a monitoring perspective, which is not specifically limited here. The image collecting apparatus 11 collects the image containing the object, and sends same to the three-dimensional object detecting apparatus 12. The three-dimensional object detecting apparatus 12 performs three-dimensional detection on the object appearing in the image, and determines a three-dimensional bounding box of the object. The object may be a vehicle, a pedestrian, a rider, an obstacle, etc., which is not specifically limited here.

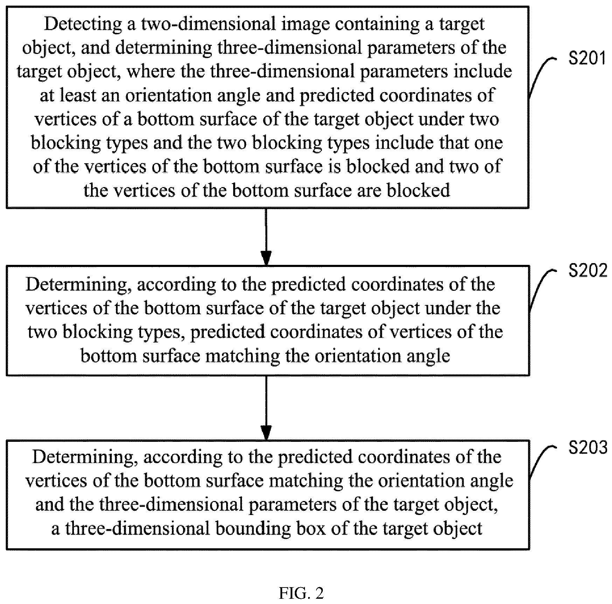

FIG. 2 is a flowchart illustrating a three-dimensional object detecting method according to a first embodiment of the present application. As shown in FIG. 2, specific steps of the method are as follows:

Step S201, detecting a two-dimensional image containing a target object, and determining three-dimensional parameters of the target object, where the three-dimensional parameters include at least an orientation angle and predicted coordinates of vertices of a bottom surface of the target object under two blocking types where the two blocking types include that one of the vertices of the bottom surface is blocked and two of the vertices of the bottom surface are blocked.

The image to be detected may be a two-dimensional image collected in scenarios such as intelligent information control, vehicle-road collaboration, auxiliary driving, and monitoring systems. The two-dimensional image contains at least one object, where one or more objects may be used as a target object for three-dimensional object detection, to determine a three-dimensional bounding box of the target object.

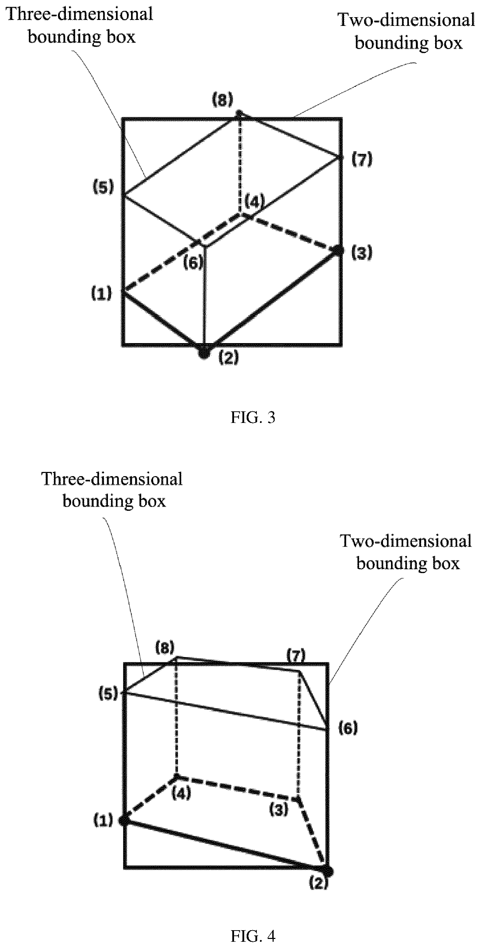

Generally, the three-dimensional bounding box of the object includes 4 vertices of a top surface and 4 vertices of a bottom surface. Based on a capturing perspective of the two-dimensional image, two different blocking types may be determined according to a blocking relationship of the 4 vertices of the bottom surface. The two blocking types include that one of the vertices of the bottom surface is blocked (as shown in FIG. 3) and two of the vertices of the bottom surface are blocked (as shown in FIG. 4). If one of the 4 vertices of the bottom surface of an object is blocked, the object corresponds to the type where one of vertices of the bottom surface is blocked. If two of the 4 vertices of the bottom surface of an object are blocked, the object corresponds to the type where two of vertices of the bottom surface are blocked.

For example, FIG. 3 shows a schematic diagram illustrating that one of vertices of the bottom surface is blocked. As shown in FIG. 3, the three-dimensional bounding box includes 8 vertices numbered as (1) to (8), where 4 vertices numbered as (1) to (4) are vertices of the bottom surface and 4 vertices numbered as (5) to (8) are vertices of the top surface; among the 4 vertices of the bottom surface, only the vertex numbered as (4) is blocked.

For example, FIG. 4 shows a schematic diagram illustrating that two of vertices of the bottom surface are blocked. As shown in FIG. 4, the three-dimensional bounding box includes 8 vertices numbered as (1) to (8), where 4 vertices numbered as (1) to (4) are vertices of the bottom surface and 4 vertices numbered as (5) to (8) are vertices of the top surface; among the 4 vertices of the bottom surface, the vertices numbered as (3) and (4) are blocked.

In this embodiment, the three-dimensional parameters of the target object refer to parameters required to determine the three-dimensional bounding box of the target object. The three-dimensional parameters of the target object include at least an orientation angle of the target object and predicted coordinates of vertices of the bottom surface of the target object under the two blocking types, and may also include a length, a width, and a height of the target object, etc.

Since it is uncertain which blocking type the object corresponds to in the two-dimensional image, during the detection process, for the two different blocking types, coordinates of the vertices of the bottom surface of the target object under each blocking type are predicted, respectively, and predicted coordinates of the vertices of the bottom surface of the target object under the two blocking types are determined.

Step S202, determining, according to the predicted coordinates of the vertices of the bottom surface of the target object under the two blocking types, predicted coordinates of vertices of the bottom surface matching the orientation angle.

After the orientation angle of the target object and the predicted coordinates of the vertices of the bottom surface of the target object under the two blocking types are determined, predicted coordinates of vertices of the bottom surface matching the orientation angle are determined according to consistency between the orientation angle of the target object and the orientation angle predicted value calculated by the predicted coordinates of the vertices of the bottom surface of the target object under the two blocking types.

Step S203, determining, according to the predicted coordinates of the vertices of the bottom surface matching the orientation angle and the three-dimensional parameters of the target object, a three-dimensional bounding box of the target object.

In this embodiment, the predicted coordinates of the vertices of the bottom surface matching the orientation angle are used as coordinates of the vertices of the bottom surface of the target object. The three-dimensional bounding box of the target object can be uniquely determined according to the coordinates of the vertices of the bottom surface of the target object as well as the length, the width and the height of the target object, etc.

In the embodiment of the present application, accuracy and robustness of the three-dimensional object detection can be effectively improved by: detecting an orientation angle and other parameters of a target object; predicting predicted coordinates of vertices of a bottom surface of the target object respectively under two blocking types; accurately determining a corresponding blocking type of the target object by selecting, based on the orientation angle of the target object, predicted coordinates of vertices of the bottom surface matching the orientation angle; using the predicted coordinates of the vertices of the bottom surface of the target object under the corresponding blocking type as coordinates of the vertices of the bottom surface of the target object; and determining a three-dimensional bounding box of the target object according to the predicted coordinates of the vertices of the bottom surface matching the orientation angle and the three-dimensional parameters of the target object.

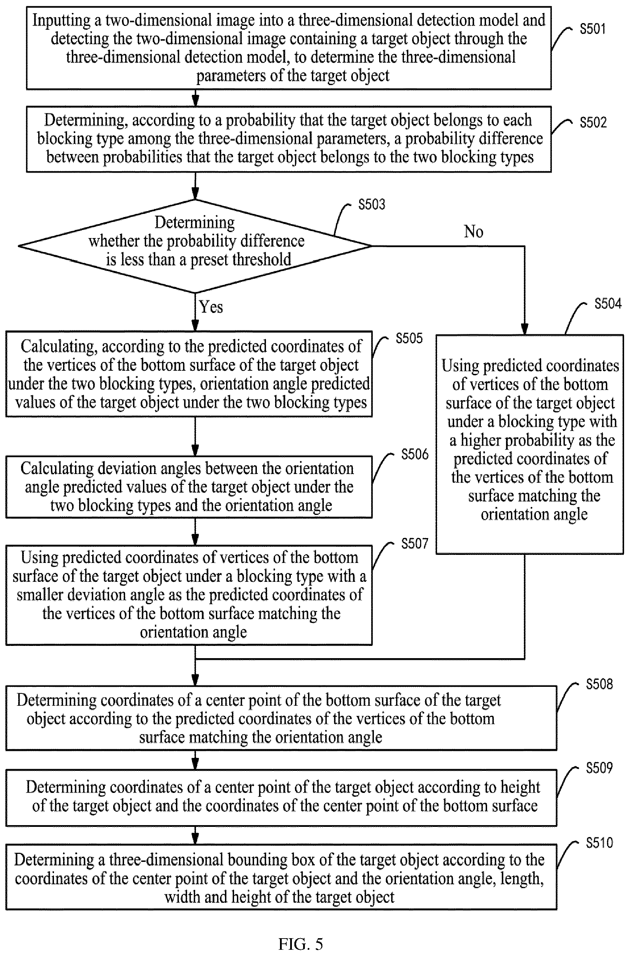

FIG. 5 is a flowchart illustrating a three-dimensional object detecting method according to a second embodiment of the present application. On the basis of the first embodiment described above, in this embodiment, the two-dimensional image is input to a three-dimensional detection model, and the two-dimensional image containing the target object is detected through the three-dimensional detection model to determine the three-dimensional parameters of the target object. The three-dimensional parameters include the orientation angle, the predicted coordinates of the vertices of the bottom surface of the target object under the two blocking types, and a probability that the target object belongs to each blocking type. If the probability difference is greater than or equal to a preset threshold, predicted coordinates of vertices of the bottom surface of the target object under a blocking type with a higher probability are used as the predicted coordinates of the vertices of the bottom surface matching the orientation angle. If the probability difference is less than the preset threshold, the predicted coordinates of the vertices of the bottom surface matching the orientation angle are determined according to the predicted coordinates of the vertices of the bottom surface of the target object under the two blocking types. The predicted coordinates of the vertices of the bottom surface matching the orientation angle may be used as coordinates of the vertices of the bottom surface of the target object, improving accuracy of the coordinates of the vertices of the bottom surface of the target object.

As shown in FIG. 5, specific steps of the method are as follows:

Step S501, inputting a two-dimensional image into a three-dimensional detection model, and detecting the two-dimensional image containing a target object through the three-dimensional detection model to determine the three-dimensional parameter of the target object.

Where the three-dimensional parameters of the target object refer to parameters required to determine the three-dimensional bounding box of the target object. The three-dimensional parameters may include an orientation angle, a length, a width, a height, predicted coordinates of vertices of a bottom surface of the target object under the two blocking types, and a probability that the target object belongs to each blocking type.

In this embodiment, a pre-trained neural network model may be used to detect the three-dimensional parameters of the target object in the two-dimensional image.

The two-dimensional image is input into the neural network model, and parameters such as the orientation angle, the length, the width and the height of the target object, the predicted coordinates of the vertices of the bottom surface of the target object under the two blocking types and the probability that the target object belongs to each blocking type, are determined and output by the neural network model.

Optionally, the neural network model may use a two-stage 2D (two-dimensional) detection framework, such as R-CNN (Region-based Convolutional Neural Networks), or Faster R-CNN (Faster Region-based Convolutional Neural Networks), etc. The neural network model includes outputting at two stages: at a first stage, outputting a two-dimensional bounding box of the target object in the two-dimensional image; and at a second stage, outputting three-dimensional parameters such as the orientation angle, the length, the width and the height of the target object, the predicted coordinates of the vertices of the bottom surface of the target object under the two blocking types and the probability that the target object belongs to each blocking type.

Exemplarily, when training the neural network model, a training set is first acquired, where the training set includes multiple sample images and marked information of target objects in the sample images. The marked information includes information on a two-dimensional bounding box of the target object, coordinates of four vertices of a bottom surface of a three-dimensional bounding box, a corresponding blocking type of the target object, and an orientation angle, a length, a width and a height of the target object, etc.

For each sample image, a predicted true value is acquired based on constraints of the two-dimensional bounding box, and corresponding marked information is determined. In a general monitoring scenario, angle of view of a camera slopes downward.

In the sample images, a corresponding blocking type of the target object, and the orientation angle, the length, the width, and the height of the target object, etc., may be marked and determined in advance.

Coordinates of 8 vertices of the three-dimensional bounding box of the target object in a camera coordinate system may be pre-marked, and for example, can be detected and determined with other sensor. Coordinates of 4 vertices of the bottom surface of the three-dimensional bounding box of the target object in the sample image can be obtained by projecting the coordinates of the 4 vertices of the bottom surface of the three-dimensional bounding box of the target object in the camera coordinate system into the two-dimensional image.

Specifically, the coordinates of the vertices of the top surface and the bottom surface of the three-dimensional bounding box of the target object in the sample image in the camera coordinate system can be expressed as:

$$V_i^{3d}[X, Y, Z]$$

, $i$ = 1, ...,8, where numbers 1-4 represent 4 vertices of the bottom surface (that is, 4 ground points), and numbers 5-8 represent 4 vertices of the top surface.

$$K = \begin{bmatrix} f_x & 0 & c_x \\ 0 & f_y & c_y \\ 0 & 0 & 1 \end{bmatrix}$$

Intrinsic parameters of a camera for collecting a sample image may be expressed as                              ,

where $f_x$ and $f_y$ are pixel focal lengths of the camera in a X-axis direction and a Y-axis direction, respectively; and $c_x$ and $c_y$ are coordinates of a principal point of the camera in the X-axis direction and the Y-axis direction, respectively. In addition, a ground equation may be expressed as: $ax + by + cz + d = 0$, and a ground normal vector is $\vec{n} = [a,b,c]$. In this way, coordinates of projection points of the 8 vertices of the three-dimensional bounding box of the target object on the sample image may be expressed as: $V_i^{2d}[u, v]$, $i = 1, ...,8$, which can be calculated by Formula I as follows:

$$V_i^{3d}(Z)\begin{bmatrix} V_i^{2d}(u) \\ V_i^{2d}(v) \\ 1 \end{bmatrix} = K \begin{bmatrix} V_i^{3d}(X) \\ V_i^{3d}(Y) \\ V_i^{3d}(Z) \end{bmatrix} \qquad \text{Formula I}$$

Coordinates of projection points of 4 vertices of the bottom surface of the three-dimensional bounding box of the target object on the sample image can be used as the coordinates of the 4 vertices of the bottom surface of the target object.

The neural network model is trained based on the training set, and the trained neural network model is used as a final three-dimensional detection model.

In this step, the two-dimensional image to be detected is input into a three-dimensional detection model, and the three-dimensional detection model is used to detect the two-dimensional image containing the target object to obtain parameters such as the orientation angle, the length, the width and the height of the target object, the predicted coordinates of the vertices of the bottom surface of the target object under the two blocking types and the probability that the target object belongs to each blocking type.

Optionally, the three-dimensional detection model may also be used to output a two-dimensional bounding box of the target object.

Step S502, determining, according to the probability that the target object belongs to each blocking type among the three-dimensional parameters, a probability difference between probabilities that the target object belongs to the two blocking types.

After the three-dimensional parameters of the target object in the two-dimensional image is detected by using the three-dimensional detection model, a probability difference between probabilities that the target object belongs to the two blocking types is calculated according to the probability that the target object belongs to each blocking type.

For example, the target object may be a vehicle, and if it is detected that a probability that the vehicle in the two-dimensional image belongs to one blocking type is PI and a probability that the vehicle belongs to the other blocking type is P2, then, in this step, the probability difference between the probabilities that the vehicle belongs to the two different blocking types may be: |P1- P2|.

Step S503, determining whether the probability difference is less than a preset threshold.

The blocking type to which the target object belongs and which is predicted by the three-dimensional detection model may be classified incorrectly, which results in large errors in the coordinates of the vertices of the bottom surface of the target object. In order to improve accuracy of the blocking type to which a definite target object belongs and improve accuracy of the coordinates of the vertices of the bottom surface of the target object, in this embodiment, prediction results of the three-dimensional detection model are not directly used; instead, based on probabilities that the target object belongs to the two blocking types, when it is determined that the prediction results has a low confidence, the blocking type to which the target object belongs is determined according to consistency between the orientation angle estimated by the predicted coordinates of the vertices of the bottom surface under the two blocking types and the orientation angle outputted by the three-dimensional detection model.

If the probability difference is greater than or equal to the preset threshold, then Step S504 is executed, using predicted coordinates of vertices of the bottom surface of the target object under a blocking type with a higher probability as the predicted coordinates of the vertices of the bottom surface matching the orientation angle, so that a corresponding blocking type of the target object can be accurately determined.

If the probability difference is less than the preset threshold, then Steps S505-S507 are executed, determining, according to the predicted coordinates of the vertices of the bottom surface of the target object under the two blocking types, the predicted coordinates of vertices of the bottom surface matching the orientation angle.

Step S504, using predicted coordinates of vertices of the bottom surface of the target object under a blocking type with a higher probability as the predicted coordinates of vertices of the bottom surface matching the orientation angle.

If the probability difference is greater than or equal to the preset threshold, it means that the blocking type to which the target object corresponds is relatively obvious, and the three-dimensional detection model has a high confidence in the prediction results of the blocking type to which the target object belongs, then Step S504 is executed, using the predicted coordinates of the vertices of the bottom surface of the target object under the blocking type with a higher probability as the predicted coordinates of the vertices of the bottom surface matching the orientation angle, so that a corresponding blocking type of the target object can be accurately determined.

Step S505, calculating, according to the predicted coordinates of the vertices of the bottom surface of the target object under the two blocking types, orientation angle predicted values of the target object under the two blocking types.

If the probability difference is less than the preset threshold, it means that the blocking type to which the target object corresponds is not obvious, the three-dimensional detection model cannot determine exactly which blocking type the target object belongs to, and the three-dimensional detection model has a low confidence in prediction results of the blocking type to which the target object belongs, then Steps S505-S507 are executed, determining, according to the predicted coordinates of the vertices of the bottom surface of the target object under the two blocking types, the predicted coordinates of the vertices of the bottom surface matching the orientation angle so as to further accurately determine a blocking type to which the target object corresponds so that the predicted coordinates of the vertices of the bottom surface of the target object under a corresponding blocking type are used as the coordinates of the vertices of the bottom surface of the target object, which improves accuracy of the coordinates of the vertices of the bottom surface of the target object.

In this embodiment, this step may be specifically implemented by:

for any one of the blocking types, converting, according to predicted coordinates of vertices of the bottom surface of the target object under the blocking type and a camera parameter, the predicted coordinates of the vertices of the bottom surface into a camera coordinate system, and adding depth information to obtain predicted three-dimensional coordinates of the vertices of the bottom surface of the target object in the camera coordinate system; determining, according to the predicted three-dimensional coordinates of the vertices of the bottom surface of the target object, a quadrilateral formed by the vertices of the bottom surface; calculating orientation angle predicted values respectively corresponding to two adjacent sides of the quadrilateral; determining, in the orientation angle predicted values respectively corresponding to the two adjacent sides, an orientation angle predicted value having a smaller deviation from the orientation angle; and using the orientation angle predicted value having the smaller deviation from the orientation angle as the orientation angle predicted value of the target object under the blocking type.

Specifically, for any one of the blocking types, the predicted coordinates of 4 vertices of the bottom surface of the target object that are output by the three-dimensional detection model may be expressed as: $V_i^{2d}[u, v]$, $i = 1, ...,4$, the predicted coordinates of the four vertices of the bottom surface may be converted into the camera coordinate system according to camera intrinsic parameters of a capturing device collecting a two-dimensional image and the following Formula II to obtain corresponding camera coordinates:

$$Cam_i^{3d} = K^{-1} * \begin{bmatrix} V_i^{2d}(u) \\ V_i^{2d}(v) \\ 1 \end{bmatrix} \qquad \text{Formula II}$$

where $K^{-1}$ is an inverse of a camera parameter K.

$$D_i = -\frac{d}{a*\frac{Cam_i^{3d}[0]}{Cam_i^{3d}[2]}+b*\frac{Cam_i^{3d}[1]}{Cam_i^{3d}[2]}+c}$$

A corresponding depth is: , then with the following Formula III, it is possible to determine predicted three-dimensional coordinates, $V_i^{3d}[X, Y, Z]$, $i = 1, ...,4$ of 4 vertices of the bottom surface of the target object in the camera coordinate system:

$$V_i^{3d} = D_i * K^{-1} * Cam_i^{3d} \qquad \text{Formula III}$$

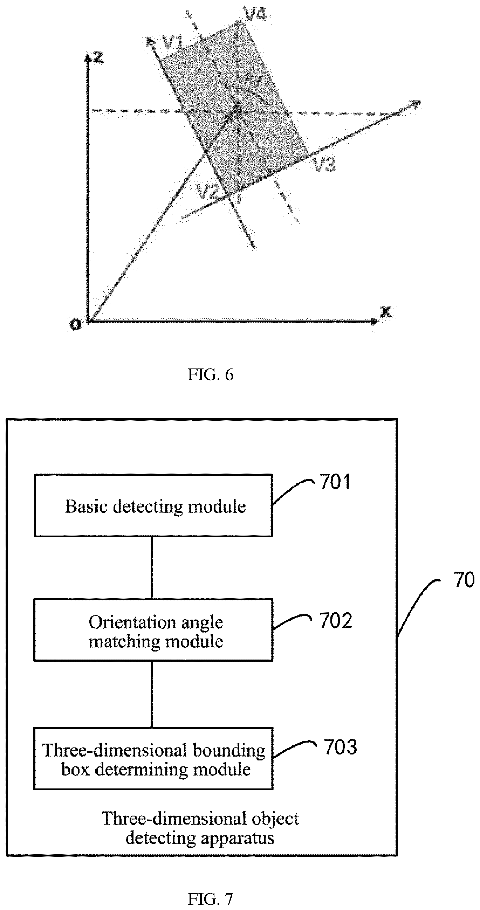

Based on the predicted three-dimensional coordinates of 4 vertices of the bottom surface of the target object in the camera coordinate system, using 4 vertices of the bottom surface of the target object as vertices, it is possible to determine a quadrilateral (V1V2V3V4 as shown in FIG. 6). Then, the orientation angle predicted values respectively corresponding to two adjacent sides (the two sides are V1V2 and V2V3 as shown in FIG. 6) of the quadrilateral are calculated.

Exemplarily, the following is an example of calculating the orientation angle predicted values corresponding to the two sides V1V2 and V2V3 as shown in FIG. 6, to illustrate a process of calculating the orientation angle predicted values respectively corresponding to any two adjacent sides of the quadrilateral:

An orientation angle predicted value corresponding to the side V1V2 may be determined by the following Formula IV:

$$ry_{12} = \arctan\left( \left\lfloor \overrightarrow{V_2V_1} \right\rfloor_x , \ \left\lfloor \overrightarrow{V_2V_1} \right\rfloor_z \right) \qquad \text{Formula IV}$$

where $ry_{12}$ represents the orientation angle predicted value corresponding to the side V1V2, $\overrightarrow{V_2V_1}$ represents a vector starting at the vertex V2 and ending at the vertex VI, $\lfloor \overrightarrow{V_2V_1} \rfloor_x$ represents a modulus of a component of the vector $\overrightarrow{V_2V_1}$ in the x-axis direction, $\lfloor \overrightarrow{V_2V_1} \rfloor_z$ represents a modulus of a component of the vector $\overrightarrow{V_2V_1}$ in the z-axis direction.

An orientation angle predicted value corresponding to the side V2V3 may be determined by the following Formula V:

$$ry_{23} = \arctan\left( \left\lfloor \overrightarrow{V_2V_3} \right\rfloor_x , \ \left\lfloor \overrightarrow{V_2V_3} \right\rfloor_z \right) \qquad \text{Formula V}$$

where $ry_{23}$ represents the orientation angle predicted value corresponding to the side V2V3, $\overrightarrow{V_2V_3}$ represents a vector starting at the vertex V2 and ending at the vertex V3, $\lfloor \overrightarrow{V_2V_3} \rfloor_x$ represents a modulus of a component of the vector $\overrightarrow{V_2V_3}$ in the x-axis direction, $\lfloor \overrightarrow{V_2V_3} \rfloor_z$ represents a modulus of a component of the vector $\overrightarrow{V_2V_3}$ in the z-axis direction.

Here, considering the periodicity of the orientation angle, $ry_{12}$, $ry_{23}$ are both limited in a range of $[-\pi,\pi]$, and the orientation angle of the target object outputted by the three-dimensional detection model is also is the range of $[\pi,\pi]$.

After the orientation angle predicted values corresponding to the two sides are determined, the one (Ry as shown in FIG. 6, possibly $ry_{12}$ or $ry_{23}$) that is closer to the orientation angle of the target object outputted by the three-dimensional detection model is selected from them, that is, an orientation angle predicted value having a smaller deviation from the orientation angle is selected, to be used as the orientation angle predicted value of the target object under the blocking type, and in this way, the orientation angle predicted value of the target object under any one of the blocking types can be accurately determined.

Step S506, calculating deviation angles between the orientation angle predicted values of the target object under the two blocking types and the orientation angle.

After the orientation angle predicted values of the target object under the two blocking types are determined, deviation angles between the orientation angle predicted values of the target object under the two blocking types and the orientation angle are calculated respectively.

Step S507, using predicted coordinates of vertices of the bottom surface of the target object under a blocking type with a smaller deviation angle as the predicted coordinates of the vertices of the bottom surface matching the orientation angle.

By comparing magnitude of the deviation angles between the orientation angle predicted values of the target object under the two blocking types and the orientation angle, it is possible to determine a blocking type having the smaller of the deviation angles between the orientation angle predicted values of the target object and the orientation angle.

The deviation angle between the orientation angle predicted value of the target object and the orientation angle is smaller, it means that the orientation angle predicted value of the target object under a corresponding blocking type is more consistent with the orientation angle of the target object outputted by the three-dimensional detection model, and the predicted coordinates of the vertices of the bottom surface of the target object under the corresponding blocking type have a higher matching degree with the orientation angle of the target object. Therefore, the predicted coordinates of the vertices of the bottom surface of the target object under the blocking type with a smaller deviation angle are used as the predicted coordinates of the vertices of the bottom surface matching the orientation angle.

In an optional embodiment, after the predicted coordinates of the vertices of the bottom surface matching the orientation angle are determined, it is possible to uniquely determine, based on the predicted coordinates of 4 vertices of the bottom surface in combination with the length, the width and the height of the target object, the three-dimensional bounding box of the target object.

In an optional embodiment, after the predicted coordinates of the vertices of the bottom surface matching the orientation angle are determined, subsequent Steps S508-S510 are used to determine the three-dimensional bounding box of the target object according to the predicted coordinates of the vertices of the bottom surface matching the orientation angle together and the three-dimensional parameters of the target object so that the three-dimensional bounding box of the target object can be accurately determined.

Step S508, determining coordinates of a center point of the bottom surface of the target object according to the predicted coordinates of the vertices of the bottom surface matching the orientation angle.

In this embodiment, the predicted coordinates of the vertices of the bottom surface matching the orientation angle may be used as coordinates of the vertices of the bottom surface of the target object, and the coordinates of the center point of the bottom surface of the target object are determined according to the predicted coordinates of the vertices of the bottom surface matching the orientation angle.

This step may be specifically implemented by:
converting, according to a ground equation and a camera parameter, the predicted coordinates of the vertices of the bottom surface matching the orientation angle into a ground coordinate system to obtain three-dimensional coordinates of the vertices of the bottom surface of the target object in the ground coordinate system; and determining the coordinates of the center point of the bottom surface of the target object according to the three-dimensional coordinates of the vertices of the bottom surface of the target object in the ground coordinate system.

Further, the converting, according to the ground equation and the camera parameter, the predicted coordinates of the vertices of the bottom surface matching the orientation angle into the ground coordinate system to obtain the three-dimensional coordinates of the vertices of the bottom surface of the target object in the ground coordinate system may be implemented by:
converting, according to the predicted coordinates of the vertices of the bottom surface matching the orientation angle and the camera parameter, the predicted coordinates of the vertices of the bottom surface matching the orientation angle into a camera coordinate system, and adding depth information to obtain three-dimensional coordinates of the vertices of the bottom surface of the target object in the camera coordinate system; determining a transformation matrix from the camera coordinate system to the ground coordinate system according to the ground equation; and determining the three-dimensional coordinates of the vertices of the bottom surface of the target object in the ground coordinate system according to the three-dimensional coordinates of the vertices of the bottom surface of the target object in the camera coordinate system and the transformation matrix.

Specifically, in Step S505 described above, during the process of calculating the orientation angle predicted values of the target object under the two blocking types, according to the predicted coordinates of the vertices of the bottom surface of the target object under the blocking type and the camera parameter, the predicted coordinates of the vertices of the bottom surface are converted into the camera coordinate system, and depth information is added, to obtain predicted three-dimensional coordinates of the vertices of the bottom surface of the target object in the camera coordinate system. On the basis of this, in this step, a transformation matrix from the camera to the ground may be first obtained according to the ground equation, then the predicted three-dimensional coordinates of the vertices of the bottom surface of the target object in the camera coordinate system are converted into a ground coordinate system according to the transformation matrix to obtain three-dimensional coordinates of the vertices of the bottom surface of the target object in the ground coordinate system; further, the coordinates of the center point of the bottom surface of the target object are determined according to the three-dimensional coordinates of the vertices of the bottom surface of the target object in the ground coordinate system, so that the three-dimensional coordinates of the vertices of the bottom surface of the target object in the ground coordinate system can be determined based on the two-dimensional predicted coordinates of the vertices of the bottom surface of the target object output by the three-dimensional detection model.

Exemplarily, the transformation matrix from the camera to the ground being first obtained according to the ground equation may be specifically implemented in the following manner:
Suppose the ground normal vector is $\vec{n} = [a,b,c]$, then the Z-axis normal vector of the ground coordinate system may be

$$G_{\vec{z}} = Norm(\vec{n})$$

expressed as , where *Norm* represents normalization of a vector. Correspondingly, a method for converting a point $P_x(1, 0, 0)$ on the X-axis in the camera coordinate system into the ground coordinate system is:
$G_{\vec{x}} = P_x - P_x \cdot (G_{\vec{z}})^* G_{\vec{z}}$, and $G_{\vec{x}}$ is normalized. The y-axis vector of the ground coordinate system may be obtained by a feature that x-axis, y-axis, and z-axis vectors are perpendicular to each other: $G_{\vec{y}} = G_{\vec{z}} \times G_{\vec{x}}$. The transformation matrix

$$T_{cam2ground} = \begin{bmatrix} G_{\vec{x}} \\ G_{\vec{y}} \\ G_{\vec{z}} \end{bmatrix}.$$

converted from the camera coordinate system to the ground coordinate system is

Formula VI as follows may be used to convert coordinates from the camera coordinate system to the ground coordinate system:

$$V_i^{3d\_ground} = T_{cam2ground} * V_i^{3d_{cam}} \qquad \text{Formula VI}$$

where $V_i^{3d\_ground}$ represents coordinates in the ground coordinate system, and $V_i^{3d_{cam}}$ represents coordinates in the camera coordinate system, and the subscript $i$ represents corresponding vertices of the bottom surface, $i$ = 1,2,3,4.

After determining the three-dimensional coordinates of the vertices of the bottom surface of the target object in the ground coordinate system, the coordinates of the center point of the bottom surface of the three-dimensional bounding box of the target object in the ground coordinate system may be determined by Formula VII as follows:

$$\text{Ground}_{3D} = mean\left(V_i^{3d_{ground}}\right) \qquad \text{Formula VII}$$

where *mean* () is an averaging function, $V_i^{3d\_ground}$ represents coordinates of the vertices of the bottom surface of the target object in the ground coordinate system, and the subscript $i$ represents corresponding vertices of the bottom surface, $i$ = 1,2,3,4.

Step S509, determining coordinates of a center point of the target object according to a height of the target object and the coordinates of the center point of the bottom surface.

Where the three-dimensional parameters further include: a length, a height and a width of the target object.

In this embodiment, after determining the coordinates of the center point of the bottom surface of the target object in the ground coordinate system, the center point of the bottom surface of the target object may be fused with size information such as the length, the width and the height to restore the center point of the three-dimensional bounding box of the target object, that is, determine the coordinates of the center point of the target object.

Exemplarily, the coordinates of the center point of the target object may be determined according to the height of the target object and the coordinates of the center point of the bottom surface by using Formula VIII as follows:

$$\text{Center}_{3D}\begin{bmatrix} x \\ y \\ z \end{bmatrix} = \text{Ground}_{3D}\begin{bmatrix} x \\ y \\ z \end{bmatrix} + \begin{bmatrix} 0 \\ 0 \\ h/2 \end{bmatrix} \qquad \text{Formula VIII}$$

where $\text{Center}_{3D}\begin{bmatrix} x \\ y \\ z \end{bmatrix}$ represents the coordinates of the center point of the target object in the ground coordinate system, $\text{Ground}_{3D}\begin{bmatrix} x \\ y \\ z \end{bmatrix}$ represents the coordinates of the center point of the bottom surface of the target object in the ground coordinate system, and h represents the height of the target object.

Step S510, determining the three-dimensional bounding box of the target object according to the coordinates of the center point of the target object and the orientation angle, the length, the width and the height of the target object.

In this embodiment, after determining the coordinates of the center point of the target object, the three-dimensional bounding box of the target object may be uniquely determined in combination with the length, the width, and the height of the target object.

The embodiment of the present application involves: predicting, based on two different blocking types, predicted coordinates of vertices of a bottom surface of a target object under different blocking types and probabilities that the target object belongs to the two different blocking types, respectively; and based on a difference between the probabilities that the target object belongs to the different blocking types and when prediction results has low confidence, the blocking type to which the target object belongs is further determined according to consistency between the orientation angle estimated by the predicted coordinates of the vertices of the bottom surface under the two blocking types and the orientation angle outputted by the three-dimensional detection model so that a corresponding blocking type of the target object can be determined accurately; and using the predicted coordinates of the vertices of the bottom surface under the corresponding blocking type as coordinates of the vertices of the bottom surface of the target object so that accuracy of the coordinates of the vertices of the bottom surface of the target object is improved; and then determining a three-dimensional bounding box of the target object based on the coordinates of the vertices of the bottom surface of the target object so that accuracy and robustness of the three-dimensional object detection can be improved.

FIG. 7 is a schematic diagram illustrating a three-dimensional object detecting apparatus according to a third embodiment of the present application. The three-dimensional object detecting apparatus according to the embodiment of the present application may execute processing flows provided in the embodiment of the three-dimensional object detecting method. As shown in FIG. 7, the three-dimensional object detecting apparatus 70 includes: a basic detecting module 701, an orientation angle matching module 702 and a three-dimensional bounding box determining module 703.

Specifically, the basic detecting module 701 is configured to detect a two-dimensional image containing a target object, and determine a three-dimensional parameters of the target object, where the three-dimensional parameters include at least an orientation angle and predicted coordinates of vertices of a bottom surface of the target object under two blocking types, where the two blocking types include that one of vertices of the bottom surface is blocked and two of the vertices of the bottom surface are blocked.

The orientation angle matching module 702 is configured to determine, according to the predicted coordinates of the vertices of the bottom surface of the target object under the two blocking types, predicted coordinates of vertices of the bottom surface matching the orientation angle.

The three-dimensional bounding box determining module 703 is configured to determine, according to the predicted coordinates of the vertices of the bottom surface matching the orientation angle and the three-dimensional parameters of the target object, a three-dimensional bounding box of the target object.

The apparatus provided in the embodiment of the present application may be specifically configured to execute the method embodiment provided in the first embodiment described above, and specific functions will not be described here again.

The embodiment of the present application involves: detecting an orientation angle and other parameters of a target object; predicting predicted coordinates of vertices of a bottom surface of the target object respectively under two blocking types; selecting predicted coordinates of vertices of the bottom surface matching the orientation angle based on the orientation angle of the target object, thereby accurately determining a corresponding blocking type of the target object; using the predicted coordinates of the vertices of the bottom surface of the target object under the corresponding blocking type as coordinates of the vertices of the bottom surface of the target object; and determining a three-dimensional bounding box of the target object according to the predicted coordinates of the vertices of the bottom surface matching the orientation angle and the three-dimensional parameters of the target object. Therefore, accuracy and robustness of the three-dimensional object detection can be effectively improved.

On the basis of the third embodiment described above, in a fourth embodiment of the present application, the three-dimensional parameters further include a probability that the target object belongs to each blocking type.

Before the determining, according to the predicted coordinates of the vertices of the bottom surface of the target object under the two blocking types, the predicted coordinates of the vertices of the bottom surface matching the orientation angle, the basic detecting module is further configured to determine a probability difference between probabilities that the target object belongs to the two blocking types.

The orientation angle matching module is further configured to, if the probability difference is greater than or equal to a preset threshold, use predicted coordinates of vertices of the bottom surface of the target object under a blocking type with a higher probability as the predicted coordinates of the vertices of the bottom surface matching the orientation angle.

In an optional embodiment, the basic detecting module is further configured to:
input a two-dimensional image into a three-dimensional detection model, and detect the two-dimensional image containing the target object through the three-dimensional detection model, to determine the three-dimensional parameters of the target object.

In an optional embodiment, the orientation angle matching module is further configured to:

if the probability difference is less than the preset threshold, determine, according to the predicted coordinates of the vertices of the bottom surface of the target object under the two blocking types, the predicted coordinates of the vertices of the bottom surface matching the orientation angle.

In an optional embodiment, the orientation angle matching module is further configured to:
calculate, according to the predicted coordinates of the vertices of the bottom surface of the target object under the two blocking types, orientation angle predicted values of the target object under the two blocking types; calculate deviation angles between the orientation angle predicted values of the target object under the two blocking types and the orientation angle; and use predicted coordinates of vertices of the bottom surface of the target object under a blocking type with a smaller deviation angle as the predicted coordinates of the vertices of the bottom surface matching the orientation angle.

In an optional embodiment, the orientation angle matching module is further configured to:
for any one of the blocking types, convert, according to predicted coordinates of vertices of the bottom surface of the target object under the blocking type and a camera parameter, the predicted coordinates of the vertices of the bottom surface into a camera coordinate system, and add depth information to obtain predicted three-dimensional coordinates of the vertices of the bottom surface of the target object in the camera coordinate system; determine, according to the predicted three-dimensional coordinates of the vertices of the bottom surface of the target object, a quadrilateral formed by the vertices of the bottom surface; calculate orientation angle predicted values respectively corresponding to two adjacent sides of the quadrilateral; determine, in the orientation angle predicted values respectively corresponding to the two adjacent sides, an orientation angle predicted value having a smaller deviation from the orientation angle; and use the orientation angle predicted value having the smaller deviation from the orientation angle as the orientation angle predicted value of the target object under the blocking type.

In an optional embodiment, the three-dimensional parameters further include: a length, a height and a width of the target object.

In an optional embodiment, the three-dimensional bounding box determining module is further configured to:
determine coordinates of a center point of the bottom surface of the target object according to the predicted coordinates of the vertices of the bottom surface matching the orientation angle; determine coordinates of a center point of the target object according to the height of the target object and the coordinates of the center point of the bottom surface; and determine the three-dimensional bounding box of the target object according to the coordinates of the center point of the target object as well as the orientation angle, the length, the width and the height of the target object.

In an optional embodiment, the three-dimensional bounding box determining module is further configured to:
convert, according to a ground equation and a camera parameter, the predicted coordinates of the vertices of the bottom surface matching the orientation angle into a ground coordinate system to obtain three-dimensional coordinates of the vertices of the bottom surface of the target object in the ground coordinate system; and determine the coordinates of the center point of the bottom surface of the target object according to the three-dimensional coordinates of the vertices of the bottom surface of the target object in the ground coordinate system.

In an optional embodiment, the three-dimensional bounding box determining module is further configured to:
convert, according to the predicted coordinates of the vertices of the bottom surface matching the orientation angle and the camera parameter, the predicted coordinates of the vertices of the bottom surface matching the orientation angle into the camera coordinate system, and add depth information to obtain three-dimensional coordinates of the vertices of the bottom surface of the target object in the camera coordinate system; determine a transformation matrix from the camera coordinate system to the ground coordinate system according to the ground equation; and determine the three-dimensional coordinates of the vertices of the bottom surface of the target object in the ground coordinate system according to the three-dimensional coordinates of the vertices of the bottom surface of the target object in the camera coordinate system and the transformation matrix.

The apparatus provided in the embodiment of the present application may be specifically configured to execute the method embodiment provided in the second embodiment described above, and specific functions will not be described here again.

The embodiment of the present application involves: predicting, based on two different blocking types, predicted coordinates of vertices of a bottom surface of a target object under different blocking types and probabilities that the target object belongs to the two different blocking types, respectively; based on a difference between the probabilities that the target object belongs to the different blocking types and when prediction results have low confidence, further determining the blocking type to which the target object belongs according to consistency between the orientation angle estimated by the predicted coordinates of the vertices of the bottom surface under the two blocking types and the orientation angle outputted by the three-dimensional detection model, so that a corresponding blocking type of the target object can be determined accurately; and using the predicted coordinates of the vertices of the bottom surface under the corresponding blocking type as coordinates of the vertices of the bottom surface of the target object so that accuracy of the coordinates of the vertices of the bottom surface of the target object is improved; and then determining a three-dimensional bounding box of the target object based on the coordinates of the vertices of the bottom surface of the target object so that accuracy and robustness of the three-dimensional object detection can be improved.

According to an embodiment of the present application, the present application also provides an electronic device and a readable storage medium.

According to an embodiment of the present application, the present application also provides a computer program product, where the program product includes a computer program stored in a readable storage medium, at least one processor of the electronic device may read a computer program from the readable medium storage, and the at least one processor executes the computer program to enable the electronic device to execute the solution provided in any of the foregoing embodiments.

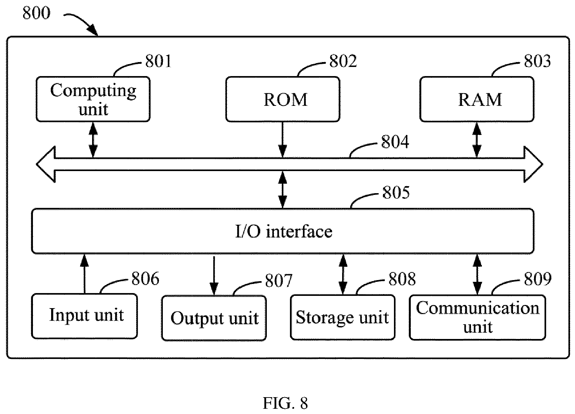

FIG. 8 shows a schematic block diagram of an exemplary electronic device 800 which can be used to implement an embodiment of the present application. The electronic device is intended to represent various forms of digital computers, such as a laptop computer, a desktop computer, a workstation, a personal digital assistant, a server, a blade server, a mainframe computer, and other suitable computers. The electronic device can also represent various forms of mobile devices, such as a personal digital assistant, a cellular phone, a smart phone, a wearable device, and other similar computing apparatuses. The components shown herein, their connections and relationships, and their functions are merely exemplary, and are not intended to limit the implementation of the present disclosure described and/or required herein.

As shown in FIG. 8, the electronic device 800 includes a computing unit 801, which may perform various appropriate actions and processes according to a computer program stored in a read-only memory (ROM) 802 or a computer program loaded from a storage unit 808 into a random access memory (RAM) 803. In the RAM 803, various programs and data required for operations of the device 800 may also be stored. The computing unit 801, the ROM 802, and the RAM 803 are connected to each other through a bus 804. An input/output (I/O) interface 805 is also connected to the bus 804.

Multiple components in the device 800 are connected to the I/O interface 805, the components include: an input unit 806, such as a keyboard, a mouse, etc.; an output unit 807, such as various types of displays, speakers, etc.; the storage unit 808, such as a magnetic disk, an optical disc, etc.; and a communication unit 809, such as a network card, a modem, a wireless communication transceiver, etc. The communication unit 809 allows the device 800 to exchange information/data with other devices over a computer network such as Internet and/or various telecommunication networks.

The computing unit 801 may be various general-purpose and/or special-purpose processing components with processing and computing capabilities. Some examples of the computing unit 801 include, but are not limited to, central processing units (CPU), graphics processing units (GPU), various general-purpose artificial intelligence (AI) computing chips, various computing units that run machine learning model algorithms, digital signal processors (DSP), and also any appropriate processors, controllers, microcontrollers, etc. The computing unit 801 executes each method and process described above, for example, the three-dimensional object detecting method. For example, in some embodiments, the three-dimensional object detecting method can be implemented as a computer software program, which is tangibly contained in a machine-readable medium, such as the storage unit 808. In some embodiments, part or all of the computer program may be loaded and/or installed into the device 800 via the ROM 802 and/or the communication unit 809. When the computer program is loaded into the RAM 803 and executed by the computing unit 801, one or more steps of the three-dimensional object detecting method as described above may be executed. Alternatively, in other embodiments, the computing unit 801 may be configured to perform the three-dimensional object detecting method in any other suitable manner (for example, by firmware).

Various embodiments of the systems and technologies described herein may be implemented in a digital electronic circuit system, an integrated circuit system, a field programmable gate array (FPGA), an application-specific integrated circuit (ASIC), application specific standard parts (ASSP), a system-on-chip (SOC), a complex programmable logic device (CPLD), computer hardware, firmware, software, and/or their combination. These various implementations may include: being implemented in one or more computer programs, where the one or more computer programs may be executed and/or interpreted on a programmable system including at least one programmable processor, and where the programmable processor may be a special-purpose or general-purpose programmable processor, can receive data and instructions from a storage system, at least one input apparatus, and at least one output apparatus, and transmit the data and instructions to the storage system, the at least one input apparatus, and the at least one output apparatus.

Program codes for implementing the method of the present disclosure can be written in one programming language or any combination of programming languages. These program codes can be provided to a processor or a controller of a general-purpose computer, a special-purpose computer, or other programmable data processing apparatus, so that functions/operations specified in flowcharts and/or block diagrams are implemented when the program codes are executed by the processor or the controller. The program codes may be executed entirely and partly on a machine, partly executed on the machine and partly executed on a remote machine as an independent software package, or entirely executed on the remote machine or a server.

In the context of the present disclosure, the machine-readable medium may be a tangible medium, which may contain or store a program that can be used by an instruction executable system, apparatus, or device or can be used in combination with the instruction executable system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include electrically connected portable computer disks based on one or more wires, hard disks, random access memories (RAM), read-only memories (ROM), erasable programmable read-only memories (EPROM or flash memories), optical fibers, portable compact disk read-only memories (CD-ROM), optical storage devices, magnetic storage devices, or any suitable combination of the foregoing.

In order to provide interaction with users, the systems and techniques described herein can be implemented on a computer, where the computer has: a display apparatus for displaying information to users (for example, a CRT (cathode ray tube) or an LCD (liquid crystal display) monitor); and a keyboard and a pointing device (for example, a mouse or trackball) through which the users can provide input to the computer. Other types of apparatuses can also be used to provide interaction with the users; for example, the feedback provided to the users may be any form of sensory feedback (for example, visual feedback, auditory feedback, or tactile feedback); and input from the users can be received in any form (including acoustic input, voice input, or tactile input).

The systems and technologies described herein can be implemented in a computing system that includes background components (for example, as a data server), or a computing system that includes middleware components (for example, an application server), or a computing system that includes front-end components (for example, a user computer with a graphical user interface or a web browser through which the user can interact with implementations of the systems and technologies described herein), or a computing system that includes any combination of such background components, middleware components, or front-end components. The components of the system can be connected to each other through any form or medium of digital data communication (for example, a communication network). Examples of communication networks include: local area networks (LAN), wide area networks (WAN) and Internet.

The computing system may include a client and a server. The client and server are generally far away from each other and usually interact through a communication network. The relationship between the client and the server is generated through computer programs running on the corresponding computers and having a client-server relationship with each other. The server may be a cloud server, also known as a cloud computing server or a cloud host, which is a host product in a cloud computing service system to overcome defects of difficult management and weak business scalability existing in a traditional physical host and a VPS service ("Virtual Private Server", or "VPS" for short). The server may also be a server of a distributed system, or a server combined with a block-chain.

It should be understood that the various forms of processes shown above may be used to reorder, add or delete steps. For example, the steps described in the present application may be executed in parallel, sequentially, or in a different order, as long as a desired result of the technical solution disclosed in the present application can be achieved, there is no limitation herein.

The above-mentioned specific implementations do not constitute a limitation to the protection scope of the present application. Persons skilled in the art should understand that various modifications, combinations, sub-combinations and substitutions may be made according to design requirements and other factors. Any modification, equivalent replacement and improvement, etc. made within the spirit and principle of the present application shall be included in the protection scope of the present disclosure.

## Claims

1. A three-dimensional object detecting method, comprising:

   detecting (S201) a two-dimensional image containing a target object, and determining three-dimensional parameters of the target object, wherein the three-dimensional parameters comprise at least an orientation angle and predicted coordinates of vertices of a bottom surface of the target object under two blocking types, and the two blocking types comprise that one of the vertices of the bottom surface is blocked and two of the vertices of the bottom surface are blocked;
   determining (S202), according to the predicted coordinates of the vertices of the bottom surface of the target object under the two blocking types, predicted coordinates of vertices of the bottom surface matching the orientation angle; and
   determining (S203), according to the predicted coordinates of the vertices of the bottom surface matching the orientation angle and the three-dimensional parameters of the target object, a three-dimensional bounding box of the target object.

2. The method according to claim 1, wherein the detecting (S201) the two-dimensional image containing the target object and the determining the three-dimensional parameters of the target object comprise:

inputting (S501) the two-dimensional image into a three-dimensional detection model and detecting the two-dimensional image containing the target object through the three-dimensional detection model to determine the three-dimensional parameters of the target object.

3. The method according to claim 1, wherein the three-dimensional parameters further comprise a probability that the target object belongs to each blocking type;
before the determining (S202), according to the predicted coordinates of the vertices of the bottom surface of the target object under the two blocking types, the predicted coordinates of the vertices of the bottom surface matching the orientation angle, the method further comprises:

determining (S502) a probability difference between probabilities that the target object belongs to the two blocking types; and
if the probability difference is greater than or equal to a preset threshold, using (S504) predicted coordinates of vertices of the bottom surface of the target object under a blocking type with a higher probability as the predicted coordinates of the vertices of the bottom surface matching the orientation angle;
preferably, wherein the determining (S202), according to the predicted coordinates of the vertices of the bottom surface of the target object under the two blocking types, the predicted coordinates of the vertices of the bottom surface matching the orientation angle comprises:
if the probability difference is less than the preset threshold, determining, according to the predicted coordinates of the vertices of the bottom surface of the target object under the two blocking types, the predicted coordinates of the vertices of the bottom surface matching the orientation angle.

4. The method according to any one of claims 1-3, wherein the determining (S202), according to the predicted coordinates of the vertices of the bottom surface of the target object under the two blocking types, the predicted coordinates of the vertices of the bottom surface matching the orientation angle comprises:

calculating (S505), according to the predicted coordinates of the vertices of the bottom surface of the target object under the two blocking types, orientation angle predicted values of the target object under the two blocking types;
calculating (S506) deviation angles between the orientation angle predicted values of the target object under the two blocking types and the orientation angle; and
using (S507) predicted coordinates of vertices of the bottom surface of the target object under a blocking type with a smaller deviation angle as the predicted coordinates of the vertices of the bottom surface matching the orientation angle,
preferably, wherein the calculating (S505), according to the predicted coordinates of the vertices of the bottom surface of the target object under the two blocking types, the orientation angle predicted values of the target object under the two blocking types comprises:

for any one of the blocking types, converting, according to predicted coordinates of vertices of the bottom surface of the target object under the blocking type and a camera parameter, the predicted coordinates of the vertices of the bottom surface into a camera coordinate system, and adding depth information to obtain predicted three-dimensional coordinates of the vertices of the bottom surface of the target object in the camera coordinate system;
determining, according to the predicted three-dimensional coordinates of the vertices of the bottom surface of the target object, a quadrilateral formed by the vertices of the bottom surface;
calculating orientation angle predicted values respectively corresponding to two adjacent sides of the quadrilateral;
determining, in the orientation angle predicted values respectively corresponding to the two adjacent sides, an orientation angle predicted value having a smaller deviation from the orientation angle; and
using the orientation angle predicted value having the smaller deviation from the orientation angle as an orientation angle predicted value of the target object under the blocking type.

5. The method according to any one of claims 1-3, wherein the three-dimensional parameters further comprise: a length, a height and a width of the target object,
wherein the determining (S203), according to the predicted coordinates of the vertices of the bottom surface matching the orientation angle and the three-dimensional parameters of the target object, the three-dimensional bounding box of the target object comprises:

determining (S508) coordinates of a center point of the bottom surface of the target object according to the predicted coordinates of the vertices of the bottom surface matching the orientation angle;

determining (S509) coordinates of a center point of the target object according to the height of the target object and the coordinates of the center point of the bottom surface; and

determining (S510) the three-dimensional bounding box of the target object according to the coordinates of the center point of the target object and the orientation angle, the length, the width and the height of the target object.

**6.** The method according to claim 5, wherein the determining (S508) the coordinates of the center point of the bottom surface of the target object according to the predicted coordinates of the vertices of the bottom surface matching the orientation angle comprises:

converting, according to a ground equation and a camera parameter, the predicted coordinates of the vertices of the bottom surface matching the orientation angle into a ground coordinate system to obtain three-dimensional coordinates of the vertices of the bottom surface of the target object in the ground coordinate system; and

determining the coordinates of the center point of the bottom surface of the target object according to the three-dimensional coordinates of the vertices of the bottom surface of the target object in the ground coordinate system; preferably, wherein the converting, according to the ground equation and the camera parameter, the predicted coordinates of the vertices of the bottom surface matching the orientation angle into the ground coordinate system to obtain the three-dimensional coordinates of the vertices of the bottom surface of the target object in the ground coordinate system comprises:

converting, according to the predicted coordinates of the vertices of the bottom surface matching the orientation angle and the camera parameter, the predicted coordinates of the vertices of the bottom surface matching the orientation angle into a camera coordinate system, and adding depth information, to obtain three-dimensional coordinates of the vertices of the bottom surface of the target object in the camera coordinate system;

determining a transformation matrix from the camera coordinate system to the ground coordinate system according to the ground equation; and

determining the three-dimensional coordinates of the vertices of the bottom surface of the target object in the ground coordinate system according to the three-dimensional coordinates of the vertices of the bottom surface of the target object in the camera coordinate system and the transformation matrix.

**7.** A three-dimensional object detecting apparatus (70), comprising:

a basic detecting module (701), configured to detect a two-dimensional image containing a target object, and determine three-dimensional parameters of the target object, wherein the three-dimensional parameters comprise at least an orientation angle and predicted coordinates of vertices of a bottom surface of the target object under two blocking types, and the two blocking types comprise that one of the vertices of the bottom surface is blocked and two of the vertices of the bottom surface are blocked;

an orientation angle matching module (702), configured to determine, according to the predicted coordinates of the vertices of the bottom surface of the target object under the two blocking types, predicted coordinates of vertices of the bottom surface matching the orientation angle; and

a three-dimensional bounding box determining module (703), configured to determine, according to the predicted coordinates of the vertices of the bottom surface matching the orientation angle and the three-dimensional parameters of the target object, a three-dimensional bounding box of the target object.

**8.** The apparatus according to claim 7, wherein the basic detecting module (701) is further configured to:
input the two-dimensional image into a three-dimensional detection model and detect the two-dimensional image containing the target object through the three-dimensional detection model, to determine the three-dimensional parameters of the target object.

**9.** The apparatus according to claim 7, wherein the three-dimensional parameters further comprise a probability that the target object belongs to each blocking type;
before determining, according to the predicted coordinates of the vertices of the bottom surface of the target object under the two blocking types, the predicted coordinates of the vertices of the bottom surface matching the orientation angle, the basic detecting module (701) is further configured to determine a probability difference between probabilities that the target object belongs to the two blocking types; and
the orientation angle matching module (702) is further configured to, if the probability difference is greater than or equal to a preset threshold, use predicted coordinates of vertices of the bottom surface of the target object under a blocking type with a higher probability as the predicted coordinates of the vertices of the bottom surface matching the orientation angle.

10. The apparatus according to claim 9, wherein the orientation angle matching module (702) is further configured to: if the probability difference is less than the preset threshold, determine, according to the predicted coordinates of the vertices of the bottom surface of the target object under the two blocking types, the predicted coordinates of the vertices of the bottom surface matching the orientation angle.

11. The apparatus according to any one of claims 7-10, wherein the orientation angle matching module (702) is further configured to:

   calculate, according to the predicted coordinates of the vertices of the bottom surface of the target object under the two blocking types, orientation angle predicted values of the target object under the two blocking types;
   calculate deviation angles between the orientation angle predicted values of the target object under the two blocking types and the orientation angle; and
   use predicted coordinates of vertices of the bottom surface of the target object under a blocking type with a smaller deviation angle as the predicted coordinates of the vertices of the bottom surface matching the orientation angle;
   preferably, wherein the orientation angle matching module (702) is further configured to:

      for any one of the blocking types, convert, according to predicted coordinates of vertices of the bottom surface of the target object under the blocking type and a camera parameter, the predicted coordinates of the vertices of the bottom surface into a camera coordinate system, and add depth information, to obtain predicted three-dimensional coordinates of the vertices of the bottom surface of the target object in the camera coordinate system;
      determine, according to the predicted three-dimensional coordinates of the vertices of the bottom surface of the target object, a quadrilateral formed by the vertices of the bottom surface;
      calculate orientation angle predicted values respectively corresponding to two adjacent sides of the quadrilateral;
      determine, in the orientation angle predicted values respectively corresponding to the two adjacent sides, an orientation angle predicted value having a smaller deviation from the orientation angle; and
      use the orientation angle predicted value having the smaller deviation from the orientation angle as the orientation angle predicted value of the target object under the blocking type.

12. The apparatus according to any one of claims 7-10, wherein the three-dimensional parameters further comprise: a length, a height and a width of the target object,
   wherein the three-dimensional bounding box determining module (703) is further configured to:

      determine coordinates of a center point of the bottom surface of the target object according to the predicted coordinates of the vertices of the bottom surface matching the orientation angle;
      determine coordinates of a center point of the target object according to the height of the target object and the coordinates of the center point of the bottom surface; and
      determine the three-dimensional bounding box of the target object according to the coordinates of the center point of the target object and the orientation angle, the length, the width and the height of the target object.

13. The apparatus according to claim 12, wherein the three-dimensional bounding box determining module (703) is further configured to:

      convert, according to a ground equation and a camera parameter, the predicted coordinates of the vertices of the bottom surface matching the orientation angle into a ground coordinate system, to obtain three-dimensional coordinates of the vertices of the bottom surface of the target object in the ground coordinate system; and
      determine the coordinates of the center point of the bottom surface of the target object according to the three-dimensional coordinates of the vertices of the bottom surface of the target object in the ground coordinate system;
      preferably, wherein the three-dimensional bounding box determining module (703) is further configured to:

         convert, according to the predicted coordinates of the vertices of the bottom surface matching the orientation angle and the camera parameter, the predicted coordinates of the vertices of the bottom surface matching the orientation angle into a camera coordinate system, and add depth information, to obtain three-dimensional coordinates of the vertices of the bottom surface of the target object in the camera coordinate system; determine a transformation matrix from the camera coordinate system to the ground coordinate system according to the ground equation; and

determine the three-dimensional coordinates of the vertices of the bottom surface of the target object in the ground coordinate system according to the three-dimensional coordinates of the vertices of the bottom surface of the target object in the camera coordinate system and the transformation matrix.

14. A non-transitory computer-readable storage medium having stored therein computer instructions that are used to cause a computer to execute the method according to any one of claims 1-6.

15. A computer program product comprising a computer program which, when executed by a processor, implements the method according to any one of claims 1-6.

Collecting a two-dimensional image → Image collecting apparatus **11** → Two-dimensional image containing an object → Three-dimensional object detecting apparatus **12** → Three-dimensional bounding box of object

**10**

FIG. 1

Detecting a two-dimensional image containing a target object, and determining three-dimensional parameters of the target object, where the three-dimensional parameters include at least an orientation angle and predicted coordinates of vertices of a bottom surface of the target object under two blocking types and the two blocking types include that one of the vertices of the bottom surface is blocked and two of the vertices of the bottom surface are blocked

S201

Determining, according to the predicted coordinates of the vertices of the bottom surface of the target object under the two blocking types, predicted coordinates of vertices of the bottom surface matching the orientation angle

S202

Determining, according to the predicted coordinates of the vertices of the bottom surface matching the orientation angle and the three-dimensional parameters of the target object, a three-dimensional bounding box of the target object

S203

FIG. 2

Three-dimensional
bounding box

Two-dimensional
bounding box

FIG. 3

Three-dimensional
bounding box

Two-dimensional
bounding box

FIG. 4

Inputting a two-dimensional image into a three-dimensional detection model and detecting the two-dimensional image containing a target object through the three-dimensional detection model, to determine the three-dimensional parameters of the target object — S501

Determining, according to a probability that the target object belongs to each blocking type among the three-dimensional parameters, a probability difference between probabilities that the target object belongs to the two blocking types — S502

Determining whether the probability difference is less than a preset threshold — S503

No

Yes

Calculating, according to the predicted coordinates of the vertices of the bottom surface of the target object under the two blocking types, orientation angle predicted values of the target object under the two blocking types — S505

Calculating deviation angles between the orientation angle predicted values of the target object under the two blocking types and the orientation angle — S506

Using predicted coordinates of vertices of the bottom surface of the target object under a blocking type with a smaller deviation angle as the predicted coordinates of the vertices of the bottom surface matching the orientation angle — S507

Using predicted coordinates of vertices of the bottom surface of the target object under a blocking type with a higher probability as the predicted coordinates of the vertices of the bottom surface matching the orientation angle — S504

Determining coordinates of a center point of the bottom surface of the target object according to the predicted coordinates of the vertices of the bottom surface matching the orientation angle — S508

Determining coordinates of a center point of the target object according to height of the target object and the coordinates of the center point of the bottom surface — S509

Determining a three-dimensional bounding box of the target object according to the coordinates of the center point of the target object and the orientation angle, length, width and height of the target object — S510

FIG. 5

FIG. 6

FIG. 7

800

801
Computing unit

802
ROM

803
RAM

804

805
I/O interface

806
Input unit

807
Output unit

808
Storage unit

809
Communication unit

FIG. 8